# EUROPEAN PATENT APPLICATION

(11) **EP 3 453 774 A1**
(43) Date of publication of application: **13.03.2019**
(21) Application number: 17900134.2
(22) Date of filing: 07.12.2017
(51) Int. Cl.: C22B 23/00, C22B 3/08, F04B 43/02, F04B 53/16

(54) **SULFURIC ACID ADDING FACILITY**

(30) Priority: 07.03.2017 JP 2017042462
(71) Applicant: Sumitomo Metal Mining Co., Ltd., Tokyo 105-8716 (JP)
(72) Inventor: KAN Takamasa, Tokyo 105-8716 (JP); KATO Atsushi, Tokyo 105-8716 (JP)
(74) Representative: Betten & Resch
(86) International application number: PCT/JP2017/044003
(87) International publication number: WO 2018/163544

(57) **Abstract**

In a sulfuric acid addition facility having the configuration in which a drain discharge line is connected to a pump head of a diaphragm pump, occurrence of troubles of the drain discharge line due to vibration of the diaphragm pump is suppressed. A sulfuric acid supply pump is provided for supplying sulfuric acid to be added to an ore slurry in an autoclave, in a leaching step of a high pressure acid leaching for nickel oxide ore, wherein the sulfuric acid supply pump is constituted by a diaphragm pump provided with a pump head having a drain outlet, and a manually operated valve is directly attached to the drain outlet of the pump head using a nipple.

## Description

### Technical Field

The present invention relates to a sulfuric acid addition facility used in a leaching step of a high pressure acid leaching for nickel oxide ore.

### Description of Related Art

A manufacturing process called a high pressure acid leaching (High Pressure Acid Leach) has been put to practical use, which is a method of placing a nickel oxide ore such as limonite or saprolite in a pressurizing device such as an autoclave together with a sulfuric acid solution, and leaching nickel under high pressure and high temperature of about 240 to 260 °C.

In the high pressure acid leaching, it is necessary to pressurize inside of the autoclave to a high pressure into which an ore slurry is supplied, and add sulfuric acid (liquid) thereto. Therefore, a pump capable of supplying sulfuric acid at a pressure higher than the pressure inside of the autoclave (hereinafter referred to as "sulfuric acid added pump") is used. A diaphragm pump is generally used as the sulfuric acid added pump (for example, Patent Document 1).

The diaphragm pump includes: a diaphragm (film), a pump head on which the diaphragm is placed, a pump shaft that moves the diaphragm, and a driving part for driving the pump shaft. The diaphragm has a mechanism in which by linearly reciprocating the pump shaft by the driving part, the diaphragm is caused to reciprocate (extend and contract), thereby causing a volume change in the pump head, and by utilizing such a volume change, liquid is sent from a suction side to a discharge side. When supplying a sulfuric acid solution to the autoclave using the diaphragm pump, a flow rate of the sulfuric acid solution can be adjusted by adjusting a stroke length of the pump shaft.

Usually, the pump head of the diaphragm pump is filled with the sulfuric acid solution. Therefore, when inspecting the inside of the pump head or repairing it, it is necessary to empty the pump head. Therefore, a drain outlet is provided to the pump head, in order to discharge the sulfuric acid solution (drain) remaining in the pump head to the outside. A drain discharge line is connected to the drain outlet of the pump head, and a manually operated valve is installed in the drain discharge line. The valve is normally in a closed state, and is in an opened state when inspection, repair etc., of the pump head are necessary.

### [Prior Art Document]

### [Patent document]

[Patent Document 1] Japanese Unexamined Patent Application Publication No. 2016-153527

### SUMMARY OF THE INVENTION

### DISCLOSURE OF THE INVENTION

Generally, the diaphragm pump makes the diaphragm reciprocate by linearly reciprocating the pump shaft, and therefore the diaphragm pump as a whole including the pump head tends to vibrate strongly. There is a possibility that such a vibration adversely affect peripheral devices of the diaphragm pump. Specifically, troubles such as loosening and breakage may occur in piping and joints constituting the drain discharge line on the outside of the pump head. Particularly, the drain discharge line, which is connected to the drain outlet of the pump head, is constituted using small diameter piping and joints, compared to a main supply line leading to the autoclave. Therefore the drain discharge line is susceptible to vibration of the diaphragm pump.

A main object of the present invention is to provide a technique capable of suppressing troubles of the drain discharge line caused by the vibration of the diaphragm pump, in a sulfuric acid addition facility having a configuration in which the drain discharge line is connected to the pump head of the diaphragm pump.

### Means for solving the Problem

According to an aspect of the present invention, there is provided a sulfuric acid addition facility, including:
a sulfuric acid supply pump for supplying sulfuric acid to be added to an ore slurry in an autoclave, in a leaching step of a high pressure acid leaching for nickel oxide ore,
wherein the sulfuric acid supply pump is constituted by a diaphragm pump provided with a pump head having a drain outlet, and
a manually operated valve is directly attached to the drain outlet of the pump head using a nipple.

### Advantage of the Invention

According to the present invention, occurrence of troubles in a drain discharge line due to a vibration of a diaphragm pump can be suppressed in a sulfuric acid addition facility having a configuration in which a drain discharge line is connected to a pump head of a diaphragm pump.

### Brief Description of the Drawings

FIG. 1 is a step view showing a hydrometallurgical process for nickel oxide ore.
FIG. 2 is a schematic view showing a configuration example of a sulfuric acid addition facility used in a leaching step.
FIG. 3 is a plan view of an essential part showing a configuration example of a drain discharge line according to a reference embodiment of the present invention.
FIG. 4 is a side view of an essential part showing an example of a drain discharge line provided in a sulfuric acid addition facility according to an embodiment of the present invention.
FIG. 5 is a view showing a configuration of a nipple used in a first embodiment of the present invention, (A) is a view of the nipple seen from a direction orthogonal to a central axis direction, and (B) is a view of the nipple seen from the central axis direction.
FIG. 6 is a side view showing the configuration of the nipple used in a second embodiment of the present invention.

### Detailed Description of the Invention

Embodiments of the present invention will be described hereafter in detail, with reference to the drawings.

In the embodiment of the present invention, explanation will be given in the following order.
1. Hydrometallurgical process for nickel oxide ore
2. Sulfuric acid addition facility
3. Finding of inventors
4. Configuration of a drain discharge line according to the embodiment
5. Effect of the embodiment
6. Example
7. Modified example

### <Hydrometallurgical process for nickel oxide ore>

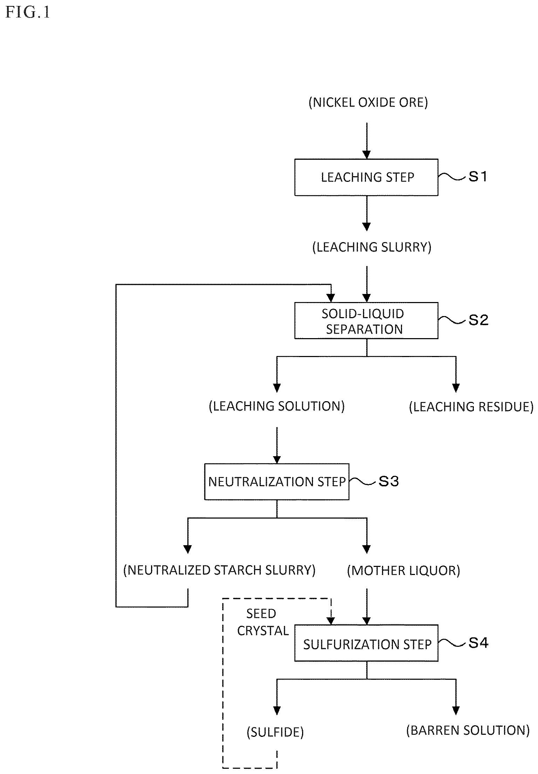

FIG. 1 is a step view showing a hydrometallurgical process for nickel oxide ore. Here, the hydrometallurgical process using high pressure acid leaching (HPAL) will be described.

The hydrometallurgical process for nickel oxide ore is a method of recovering nickel and cobalt by leaching them from nickel oxide ore. The hydrometallurgical process includes: a leaching step S1 of adding sulfuric acid to a slurry of nickel oxide ore and applying a leaching treatment thereto under high pressure and high temperature; a solid-liquid separation step S2 of separating a residue from the leaching slurry obtained in the leaching step S1, to obtain a leachate containing nickel and cobalt; a neutralization step S3 of adjusting pH of the leachate obtained in the solid-liquid separation step S2 and separating impurity elements in the leachate as a neutralized starch, to thereby obtain a neutralized final solution; and a sulfurization step S4 of adding a sulfurizing agent such as hydrogen sulfide gas to the neutralized final solution obtained in the neutralization step S3, to thereby produce mixed sulfide containing nickel and cobalt. Each step will be more specifically described hereafter.

### (Leaching step)

In the leaching step S1, sulfuric acid is added to the slurry (ore slurry) of the nickel oxide ore supplied to the autoclave, and a mixture is stirred under a temperature of about 240 °C to 260 °C and a pressure of about 3 Pa to 5 MPa, to thereby produce a leaching slurry consisting of a leaching residue and a leachate.

As the nickel oxide ore, so-called laterite ores such as limonite ore and saprolite ore are mainly used. A nickel content of the laterite ore is usually 0.8 to 2.5 wt%, which is contained as a hydroxide or a silica magnesia (magnesium silicate) mineral. Further, iron content is 10 to 50 wt%, which is mainly in a form of trivalent hydroxide (goethite), but divalent iron is partially contained in the silica magnesia mineral.

In the leaching step S1, for example, leaching reactions and high-temperature thermal hydrolysis reactions represented by the following formulas (1) to (5) occur. Thereby, leaching of nickel, cobalt, etc., as sulfate, and immobilization of the leached iron sulfate as hematite are carried out. However, immobilization of iron ions does not proceed completely. Therefore, bivalent and trivalent iron ions are usually contained in a liquid portion of the leaching slurry obtained in the leaching step S1, in addition to nickel and cobalt, etc. In this leaching step S1, it is preferable to adjust pH of the obtained leachate to 0.1 to 1.0, from a viewpoint of a filtration property of the leaching residue containing hematite produced in the subsequent solid-liquid separation step S2.

"Leaching reaction"

MO + H₂SO₄ → MSO₄ + H₂O (1)

(Wherein M represents Ni, Co, Fe, Zn, Cu, Mg, Cr, Mn, etc.)

2Fe(OH)₃ + 3H₂SO₄ → Fe₂(SO₄)₃ + 6H₂O (2)

FeO + H₂SO₄ → FeSO₄ + H₂O (3)

"High temperature thermal hydrolysis reaction"

2FeSO₄ + H₂SO₄ + 1/2O₂ → Fe₂(SO₄)₃ + H₂O (4)

Fe₂(SO₄)₃ + 3H₂O → Fe₂O₃ + 3H₂SO₄ (5)

The concentration of the slurry in the leaching step S1 is not particularly limited. However, the concentration of the slurry is preferably adjusted to 15 to 45 wt%. Further, an addition amount of sulfuric acid to be applied in the leaching step S1 is not particularly limited, and an excess amount enough to leach the iron in the ore is used. For example, the amount of sulfuric acid added per ton of ore can be 300 to 400 kg.

### (Solid-liquid separation step)

In the solid-liquid separation step S2, the leaching slurry produced in the leaching step S1 is washed in multiple stages to obtain a leachate containing nickel and cobalt and other leaching residue.

In the solid-liquid separation step S2, the leaching slurry is mixed with a washing liquid, and thereafter solid-liquid separation treatment is performed using a solid-liquid separating device such as a thickener. Specifically, first, the slurry is diluted with the washing liquid, and then the leaching residue in the slurry is concentrated as a sediment of the thickener. Thereby, an amount of nickel adhering to the leaching residue can be reduced according to a dilution degree. In an actual operation, by using the thickeners having such functions connected in multiple stages, it is possible to improve a recovery rate of nickel and cobalt.

### (Neutralization step)

In the neutralization step S3, a neutralizing agent such as magnesium oxide or calcium carbonate is added so that the pH of the leaching solution is 4 or less, while suppressing the oxidation of the leachate separated in the solid-liquid separation step S 2, to thereby obtain a neutralized starch slurry containing trivalent iron and a mother liquor (neutralized final solution) for nickel recovery. By performing neutralization treatment of the leachate as described above, the excess acid used in the leaching step S1 is neutralized to produce a neutralized final solution, and impurities such as trivalent iron ions and aluminum ions remaining in the solution are removed as neutralized starches.

The neutralized starch slurry obtained in the neutralization step S3 can be sent to the solid-liquid separation step S2, if necessary. Thereby, nickel contained in the neutralized starch slurry can be effectively recovered.

### (Sulfurization step)

In the sulfurization step S4, a sulfurizing reaction is caused by blowing a sulfurizing agent such as hydrogen sulfide gas or the like into the neutralized final solution which is the mother liquor for nickel recovery, to thereby produce sulfide containing nickel and cobalt, and a barren solution. The barren solution is a liquid after sulphurization in which a nickel concentration is stabilized at a low level. When zinc is contained in the neutralized final solution, zinc can be selectively separated as sulphide before separating nickel and cobalt as sulphides.

In the sulfurization step S4, the slurry containing sulphides such as nickel and cobalt is subjected to sedimentation separation treatment using a sedimentation separation device such as a thickener, to thereby recover only a mixed sulfide of nickel and cobalt from a bottom of the thickener, and meanwhile recover an aqueous solution component as a barren solution by overflowing this solution.

### <2. Sulfuric acid addition facility>

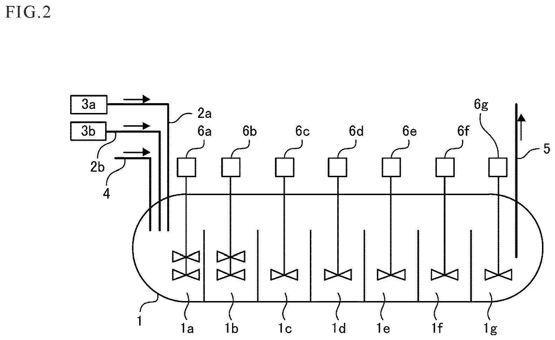

FIG. 2 is a schematic view showing a configuration example of a sulfuric acid addition facility used in the leaching step.

A sulfuric acid addition facility shown in the figure is a facility for supplying sulfuric acid to the autoclave used in the leaching step S1 of the hydrometallurgy for nickel oxide ore based on the high pressure acid leaching. The sulfurization addition facility includes two sulfuric acid supply pipes 2 (2a, 2b) and two sulfuric acid supply pumps 3 (3a, 3b) connected to an autoclave 1.

The autoclave 1 is partitioned into a plurality of compartments 1a to 1g by partition walls. The above-described two sulfuric acid supply pipes 2a and 2b are connected to a most upstream compartment 1a, together with a slurry supply pipe 4 for supplying raw ore slurry to the autoclave 1.

On the other hand, a slurry discharge pipe 5 for discharging the leaching slurry is connected to a most downstream compartment 1g. Further, stirrers 6 (6a to 6g) are individually installed in each compartment 1a to 1g. The stirrers 6 (6a to 6g) stir the slurry in the corresponding compartments 1a to 1g.

The sulfuric acid supply pipes 2 (2a, 2b) form a flow path of sulfuric acid which is a liquid. The sulfuric acid supply pumps 3 (3a, 3b) are constituted by using the diaphragm pump. A basic configuration and operation of the diaphragm pump are as described above. The sulfuric acid supply pumps 3 supply (pressurize) sulfuric acid (liquid) stored in a sulfuric acid supply tank (not shown) to the autoclave 1 through the sulfuric acid supply pipes 2.

In the sulfuric acid addition facility having the above configuration, the raw slurry and sulfuric acid are supplied to the most upstream compartment 1a through the slurry supply pipes 2 (2a, 2b) and the sulfuric acid supply pipe 4. Thereafter, the slurry is sequentially sent from the most upstream compartment 1a toward the most downstream compartment 1g, and is stirred by the stirrers 6 (6a to 6g) in the middle thereof. Thereby, leaching of valuable metals proceeds during a process of transferring the slurry from the most upstream compartment 1a to the most downstream compartment 1g. The leached slurry stirred in the most downstream compartment 1g is sent to the next step (solid-liquid separation step) through the slurry discharge pipe 5.

The above-described sulfuric acid addition facility is a facility for adding sulfuric acid into the autoclave 1, followed by being subjected to a leaching treatment under high pressure and high temperature, and therefore the sulfuric acid supply pumps 3 (3a, 3b) as its constituent elements are used under severe conditions. Therefore, frequency of conducting maintenance and inspection (including repair) of the sulfuric acid supply pumps 3 (3a, 3b) is increased.

Therefore, in order to minimize a shutdown time during the maintenance and inspection, two sulfuric acid supply pumps 3 (3a, 3b) are provided in parallel with one pump being used regularly and the other pump being spare. Then, during a normal operation, for example, while one sulfuric acid supply pump 3a is in operation, the other sulfuric acid supply pump 3b is in a standby state. Meanwhile, when conducting the maintenance and inspection of the sulfuric acid supply pump 3a, the sulfuric acid supply pump 3b is operated after stopping the sulfuric acid supply pump 3a (after stopping the addition of sulfuric acid to the autoclave 1) in order to switch the pump to be operated. Thereby, it is possible to conduct the maintenance and inspection while the sulfuric acid supply pump 3a is kept in a standby state.

When emptying the pump head at the time of conducting the maintenance and inspection of the sulfuric acid supply pumps 3 (3a, 3b), it is necessary to discharge the sulfuric acid solution (drain) remaining in the pump head to the outside. Therefore, a drain discharge line is connected to the sulfuric acid supply pumps 3. The drain discharge line is formed by using piping, joints, etc.

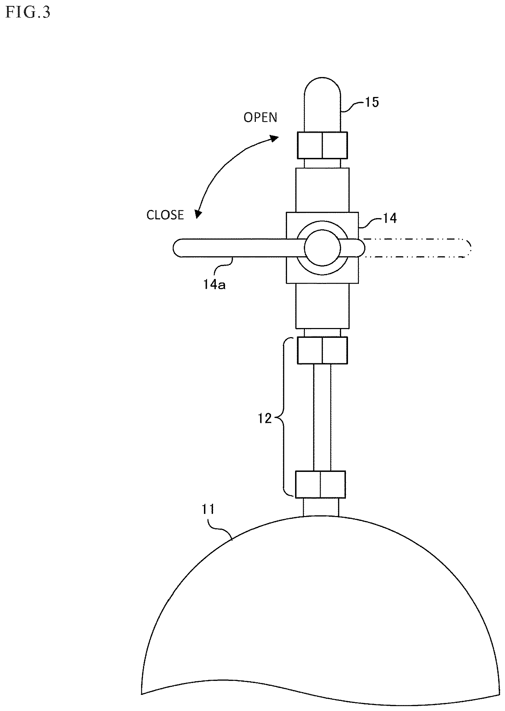

FIG. 3 is a plan view of an essential part showing a configuration example of the drain discharge line according to a reference embodiment of the present invention. FIG. 3 shows a case in which the pump head 11 included in the sulfuric acid supply pumps 3 is arranged vertically (in a vertical direction). The pump head 11 is formed in a circular shape in a plan view. A drain outlet (not shown) is formed on an outer peripheral surface of the pump head 11. The drain outlet is provided for discharging the sulfuric acid solution (drain) remaining in the pump head to the outside and communicates with a space inside of the pump head. A female screw is formed in the drain outlet at a predetermined depth toward a back side (center side) of the pump head 11.

A manually operated valve 14 is connected to the drain outlet of the pump head 11 using a joint 12 formed as a union. The joint 12 constitues the drain discharge line together with other joint 15 and piping (not shown). The valve 14 opens and closes a duct of the drain discharge line, and is provided with an operation lever 14a for that purpose. The operation lever 14a is attached to an upper portion of the valve 14 in a state of being slidable in a lever central axis direction.

In the drain discharge line having the above configuration, the valve 14 is closed when the sulfuric acid supply pumps 3 are in operation, and the operation lever 14a is turned to open the valve 14 when the operation of the sulfuric acid supply pumps 3 is stopped for maintenance and inspection and the sulfuric acid solution is discharged from the pump head 11.

### <3. Finding of inventors>

Due to its nature, the diaphragm pump used as the sulfuric acid supply pump 3 is vibrated due to a reciprocating movement or the like of the pump shaft. Meanwhile, in the drain discharge line connected to the pump head 11 of the diaphragm pump, the vibration of the diaphragm pump causes troubles such as loosening and breakage to occur in piping, joints, etc. The present inventors intensively studied in order to prevent the occurrence of such troubles. Detailed explanation will be given hereafter.

The diameter of the piping and the joint used for the drain discharge line is much smaller than that used for the main supply line, and the present inventors initially consider the above fact to be a main cause of the occurrence of the troubles, and focus on a mechanical strength of the drain discharge line. However, when a situation in which troubles occur is carefully examined, it is found that most of the troubles occur in a section from the pump head 11 of the diaphragm pump to the valve 14. Based on this confirmation, the present inventors consider that the occurrence of the troubles are triggered as follows: when the diaphragm pump is vibrated, the drain discharge line connected to the pump head 11 is swung by a weight, etc., of the valve 14, and a load is concentrated on a part which becomes a power point of the vibration. Based on such a consideration, the present invention is provided.

### <4. Configuration of the drain discharge line according to an embodiment>

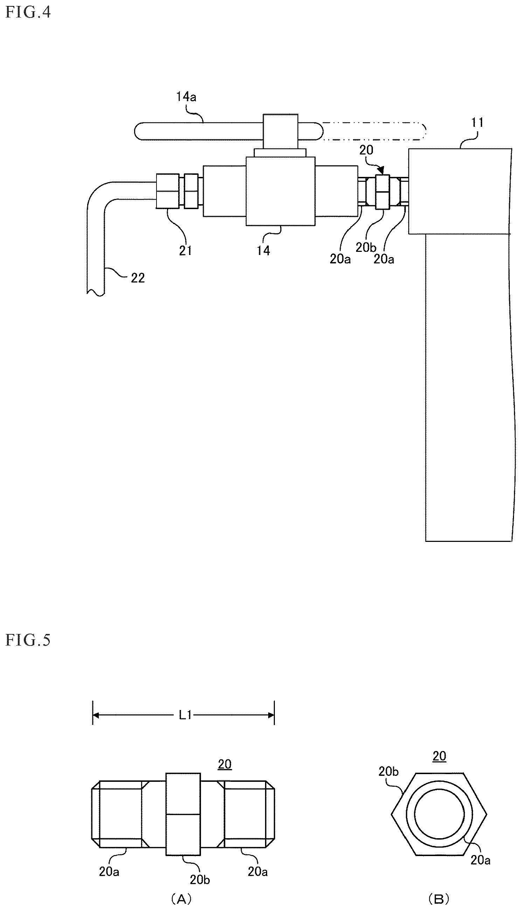

FIG. 4 is a side view of an essential part showing an example of the drain discharge line provided in the sulfuric acid addition facility according to an embodiment of the present invention. FIG. 4 shows a case that the pump head 11 included in the sulfuric acid supply pump 3 is disposed vertically (in a vertical direction).

The same drain outlet as described above is formed on the outer peripheral surface of the pump head 11. The valve 14 is directly attached to the pump head 11 using the nipple 20. "Direct attachment" described here means a mode in which the valve 14 is directly attached to the drain outlet of the pump head 11, with other members (joints, piping, etc.) other than the nipple 20 substantially not interposed. However, members (such as sealing materials) used to maintain air-tightness and water-tightness are excluded from "other members".

Male screws 20a, 20a are formed on both sides of the nipple 20 in the central axis direction. Meanwhile, a female screw (not shown) corresponding to the male screw 20a of the nipple 20 is formed at the drain outlet of the pump head 11. Further, a female screw (not shown) corresponding to the male screw 20a of the nipple 20 is also formed in the main body portion of the valve 14. The male screw 20a and the female screw can be screwed with each other. Screwing means that screws are meshed with each other like bolts and nuts. Note that two female screws are formed on the main portion of the valve 14. Then, one female screw is disposed on an upstream side and the other female screw is disposed on a downstream side.

The nipple 20 is constituted by a nipple having a hexagonal portion 20b between the male screws 20a on both sides, that is, a hexagonal nipple. The nipple 20 is preferably made of stainless steel. Particularly, SUS 316 is excellent in corrosion resistance and chemical resistance, and therefore it is suitable as a material for the nipple 20.

One male screw 20a of the nipple 20 is screwed into the female screw on the outer peripheral surface of the pump head 11, and the other male screw 20a is screwed into the female screw on the upstream side of the main body of the valve 14. The hexagonal portion 20b of the nipple 20 is used to rotate the nipple 20 using a tool such as a spanner when attaching the nipple 20.

A length of the nipple 20 is preferably 65 mm or less, and more preferably 45 mm or less. Particularly, when the length of the nipple 20 is 45 mm or less, the swing of the valve 14 caused by the vibration of the diaphragm pump can be effectively suppressed. Further, the length of the nipple 20 is preferably set to 35 mm or more, and more preferably set to 40 mm or more, in order to secure a screwing length (screwing depth) of the nipple 20 into the pump head 11 and the main body of the valve 14, to a predetermined size or more, and in order to secure a width dimension of the hexagonal portion 20b to such an extent that there is no problem in using the tool. The length of the nipple 20 refers to a dimension in the central axis direction of the nipple 20. An inner diameter of the nipple 20 is preferably 6 mm or more.

On the other hand, a piping 22 is connected to the downstream side of the valve 14 using a joint 21. The joint 21 is formed, for example, as a union. The joint 21 has a male screw on one side and a female screw on the other side in the central axis direction. The male screw of the joint 21 is screwed into the female screw on the downstream side of the main body of the valve 14. The female screw of the joint 21 is screwed into the male screw formed at an end portion of the piping 22. The piping 22 has a substantially L-shaped bent shape.

### <5. Effect of the embodiment>

In the embodiment of the present invention, the following configuration is adopted: sulfuric acid supply pumps 3 are constituted by the diaphragm pump equipped with the pump head 11 having the drain outlet, and the valve 14 is directly attached to the drain outlet of the pump head 11 using the nipple 20. Thereby, the valve 14 is disposed close to the pump head 11, and therefore the vibration of the drain discharge line (particularly, between the pump head 11 and the valve 14) due to the vibration of the diaphragm pump can be suppressed small. Further, the pump head 11 and the valve 14 are integrally vibrated, and therefore a mechanical load on the nipple 20 connecting the both is reduced. As a result, the troubles of the drain discharge line caused by the vibration of the diaphragm pump, can be effectively suppressed.

### <6. Examples>

Examples of the present invention will be described hereafter. In these examples, a configuration of the nipple 20 used for directly attaching the valve 14 to the pump head 11 will be described more specifically. However, the present invention is not limited to the following examples.

### (First example)

In a first embodiment, as shown in FIGS. 5 (A) and 5 (B), the nipple 20 having a pair of right and left male screws 20a and a hexagonal portion 20b between the male screws 20a, that is, a hexagonal nipple, was used. Length L1 of the nipple 20 is 45 mm, the inner diameter is 6 mm, and the material is SUS 316. FIG. 5 (A) is a view (side view) of the nipple seen from a direction orthogonal to the central axis direction, and FIG. 5 (B) is a view of the nipple seen from the central axis direction.

When the valve 14 is directly attached to the pump head 11 using the nipple 20 of the first example to form the drain discharge line, and the diaphragm pump is operated as usual to continuously monitor the occurrence of troubles at the drain discharge line, the troubles don't occur even after elapse of an operation period of 22 months.

Whether or not troubles occurred was judged based on whether breakage such as cracks occurred in the piping and joints constituting the drain discharge line. Further, a diaphragm pump "02PU10AB type (104 kW (60 Hz))" manufactured by LEWA was used for the sulfuric acid supply pump 3. The following point also applies to other examples, etc.

### (Second example)

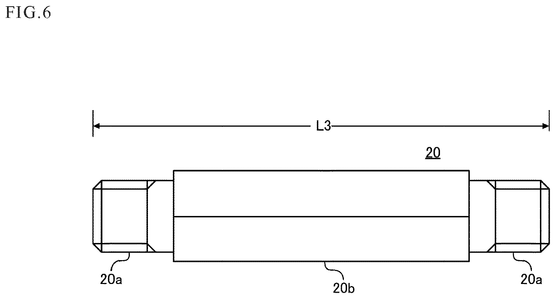

In a second example as shown in FIG. 6, the nipple 20 having length L3 of 105 mm was used. The male screws 20a are formed on both sides of the nipple 20, and a hexagonal portion 20b is formed between the male screws 20a, and this point is the same as in the above-described first example, including the material of the nipple 20 and the length of the male screws 20a. However, the inner diameter of the nipple 20 is 3 mm. The nipple 20 used in the second embodiment is a ready-made product (Swagelok's model number SS-8-HLN-4.00), but the nipple 20 used in the first embodiment is made by the present inventors themselves.

When the valve 14 was directly attached to the pump head 11 using the nipple 20 of the second embodiment, and the occurrence of the troubles at the drain discharge line was continuously monitored in the same manner as described above, it was found that the troubles occurred 4 months after start of the operation.

### (Comparative example)

In a comparative example, as shown in the above-described FIG. 3, the valve 14 was connected to the pump head 11 using the joint 12 formed as a union. Further, a union having a length of 120 mm, an inner diameter of 3 mm, and a material of SUS 316 was used for the joint 12.

When the valve 14 was connected to the pump head 11 using the joint 12 of the comparative example and the occurrence of troubles was continuously monitored at the drain discharge line in the same manner as described above, troubles of six numbers of times occurred during the 16 month driving period. The reason for such a higher frequency of the occurrence of the troubles in the comparative example is considered as follows: the distance (piping length) from the pump head 11 to the valve 14 is increased in a length direction of the drain discharge line, and the vibration of the diaphragm pump is amplified by the weight of the valve 14 and it is easy to induce the troubles.

From the above result, it is found that when the valve 14 is directly attached to the pump head 11 using the nipple 20 of the first example and the second example, the frequency of the occurrence of the troubles is decreased compared to the comparative example. There is a possibility that safety and environmental risk caused by a leak of sulfuric acid becomes higher due to the occurrence of the troubles such as cracks. Further, in order to perform repair, it is necessary to temporarily stop a sulfuric acid addition state in order to switch the sulfuric acid supply pumps 3, thereby leading to a deterioration in efficiency of the sulfuric acid reaction in the autoclave 1. Accordingly, it can be said that there is a high industrial value in reducing the frequency of the occurrence of the troubles in terms of not only safety and an environmental aspect but also a reduction in a labor cost and a repair cost.

### <7. Modified example, etc.>

A technical scope of the present invention is not limited to the embodiment described above but includes various modes and modifications as far as the specific effects obtained by the constituent features of the invention and combinations thereof can be derived.

For example, in the above-described embodiment, the nipple 20 made of a hexagonal nipple having a hexagonal portion 20b is used. However, the present invention is not limited thereto, and a nipple without the hexagonal portion 20b may be used. However, it is preferable to adopt the hexagonal nipple, in consideration of workability of the sulfuric acid addition facility.

### Description of Signs and Numerals

1 ... Autoclave
2 ... sulfuric acid supply pipe
3 ... sulfuric acid supply pump
11 ... Pump head
14 ... Valve
20 ... nipple

## Claims

1. A sulfuric acid addition facility, comprising:
a sulfuric acid supply pump for supplying sulfuric acid to be added to an ore slurry in an autoclave, in a leaching step of a high pressure acid leaching for nickel oxide ore,
wherein the sulfuric acid supply pump is constituted by a diaphragm pump provided with a pump head having a drain outlet, and
a manually operated valve is directly attached to the drain outlet of the pump head using a nipple.

2. The sulfuric acid addition facility according to claim 1, wherein a length of the nipple is 45 mm or less.

3. The sulfuric acid addition facility according to claim 1 or 2, wherein an inner diameter of the nipple is 6 mm or more.

4. The sulfuric acid addition facility according to any one of claims 1 to 3, wherein the nipple is a hexagonal nipple.

5. The sulfuric acid addition facility according to any one of claims 1 to 4, wherein the nipple is made of SUS 316.
